# EUROPEAN PATENT APPLICATION

(11) **EP 4 542 390 A1**
(43) Date of publication of application: **23.04.2025**
(21) Application number: 24204322.2
(22) Date of filing: 02.10.2024
(51) Int. Cl.: G06F 9/50, G06F 9/48, G06F 8/51, G06F 9/445, H04L 41/08

(54) **METHODS AND APPARATUS TO IMPLEMENT POST-PROVISIONING TASKS**

(30) Priority: 18.10.2023 US 202318489527
(71) Applicant: VMware LLC, Palo Alto, CA 94304 (US)
(72) Inventor: Pavlov, Daniel, 1166 Sofia (BG); Dzhigarov, Marin Stoyanov, 1151 Sofia (BG); Dimitrov, Alexander, 1797 Sofia (BG); Todorov, Atanas, 1797 Sofia (BG); Raikov, Ventsyslav, 1797 Sofia (BG); Genchev, Stoyan Staykov, 1700 Sofia (BG); Reutova, Valentina Leonidovna, London, E14 (GB)
(74) Representative: Dilg, Haeusler, Schindelmann Patentanwaltsgesellschaft mbH

(57) **Abstract**

Methods and apparatus to implement post-provisioning tasks are disclosed. An example apparatus comprising memory, instructions, and programmable circuitry to be programmed by the instructions to obtain metadata associated with a post-provisioning task, the post-provisioning task to modify a plugin, the plugin to provide a capability to a cloud resource of a computing platform provider, the metadata represented in accordance with a first file format, transform the metadata from the first file format to a second file format, the second file format compatible with the plugin, and register the post-provisioning task in a deployment environment provided by the computing platform provider.

## Description

### FIELD OF THE DISCLOSURE

This disclosure relates generally to computers tasks and, more particularly, to methods and apparatus to implement post-provisioning tasks.

### BACKGROUND

Cloud computing involves access to computing resources including storage, processing power, databases, networking analytics, artificial intelligence, and software applications via a networked data center. Cloud servers can include compute, memory, and/or storage resources to remotely perform services and/or functions for an organization. As the use of cloud computing has evolved, so has the introduction and use of tools to manage such cloud computing resources and deployments.

### BRIEF DESCRIPTION OF THE DRAWINGS

FIG. 1 is a block diagram of an example environment in which an example post-provisioning service operates to manage the post-provisioning tasks of cloud computing resources.
FIG. 2 is a block diagram of an example implementation of the post-provisioning service of FIG. 1.
FIG. 3 illustrates a first example implementation of the post-provisioning service of FIG. 2.
FIG. 4 illustrates a second example implementation of the example post-provisioning service of FIG. 2.
FIGS. 5 and 6 are flowcharts representative of example machine readable instructions and/or example operations that may be executed, instantiated, and/or performed by example programmable circuitry to implement the post-provisioning service of FIG. 2.
FIG. 7 is a block diagram of an example processing platform including programmable circuitry structured to execute, instantiate, and/or perform the example machine readable instructions and/or perform the example operations of FIGS. 5 and 6 to implement the post-provisioning service of FIG. 2.
FIG. 8 is a block diagram of an example implementation of the programmable circuitry of FIG. 7.
FIG. 9 is a block diagram of another example implementation of the programmable circuitry of FIG. 7.

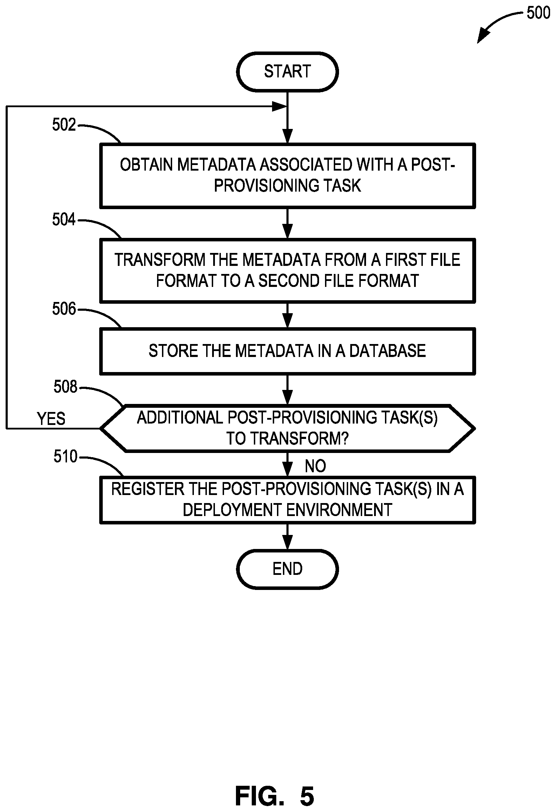

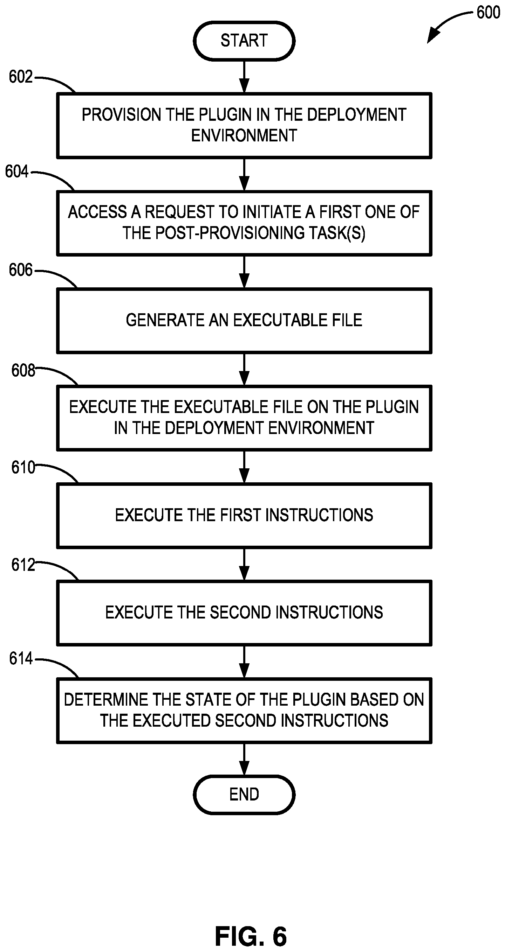

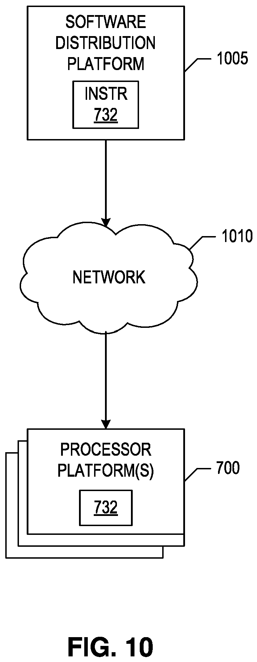

FIG. 10 is a block diagram of an example software/firmware/instructions distribution platform (e.g., one or more servers) to distribute software, instructions, and/or firmware (e.g., corresponding to the example machine readable instructions of FIGS. 5 and 6) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

In recent years, increasingly large and complex computational workloads (e.g., artificial intelligence (AI), cryptography, scientific simulations, etc.) have been deployed to cloud servers. Such workloads may be associated with a large number of virtual machines (VMs), containers, and/or other cloud resources, which may be spread across multiple cloud providers. In a virtual infrastructure, such as a multi-cloud management platform, a cloud endpoint is a system and/or a service on which a user can provision resources. The cloud endpoint may be a public cloud resource (e.g., a web service such as Amazon Web Services (AWS), etc.), a virtual appliance (e.g., an external orchestrator appliance, etc.), a private cloud (e.g., hosted by VMware vSphere^{™}, Microsoft Hyper-V^{™}, etc.), etc. A service may have multiple cloud endpoints, such as a catalog service that provides catalog features for a shell/user interface application service to consume. Cloud endpoints may include physical endpoints, virtual endpoints, Internet Protocol Address Management (IPAM) endpoints, etc.

Virtualization technologies can be used for computing, storage, and/or networking. Using virtualization, hardware computing resources and/or other physical resources can be replicated in software. One or more application programming interfaces (APIs) can be implemented to provide access to virtualized resources for users, applications, and/or systems while limiting or masking underlying software and/or hardware structures. Virtualization is increasingly executed in the cloud environment.

Cloud environments can be complex, with a large number of resources to be managed and configured. This can make it difficult for organizations to ensure that their cloud resources are configured correctly and for optimized performance. Cloud management services (e.g., a VMware^{®} VRealize^{®} Automation^{™} (VRA) service, a VMware^{®} Aria Automation service, etc.) allow a user to create and/or otherwise deploy machines, applications, and/or services to a cloud infrastructure. Such cloud management services may include a blueprint development and deployment service. A deployment in a cloud-based service is a provisioned instance of a blueprint. As used herein, a blueprint is a specification that defines machines, applications, and/or services that can be deployed to cloud resources. Blueprints may be developed to target specific cloud vendors (e.g., AWS cloud vendor, a virtual appliance such as an external orchestrator appliance, etc., VMware^{®} vSphere^{™} cloud vendor, Microsoft Hyper-V^{™} cloud vendor, etc.).

The creation of blueprints is typically performed as an infrastructure as code (IaC) process. Infrastructure as code (IaC) allows organizations to automate provisioning and configuration of one or more cloud resources. The one or more cloud resources may be distributed across one or more cloud resource providers. IaC also makes it easier to maintain and update cloud infrastructure over time, scale cloud infrastructure up or down as needed, and efficiently respond to changing business needs.

When a blueprint is deployed, a cloud management service (e.g., VRA) may use a set of rules and policies to automatically provision and configure the necessary resources to create the desired virtual environment. This can include deploying VMs from templates, creating networks and storage, and configuring various software components and settings. By using blueprints, organizations can increase assurances of consistency and repeatability in their virtualized environments, while also reducing the amount of effort required for deployment and maintenance of the virtualized environment. Additionally, blueprints can be versioned and shared across teams, making it easier to collaborate and streamline the development and deployment process.

Infrastructure as data (IaD) further simplifies the blueprint deployment process, expanding upon the IaC concept and reducing cloud configuration to data. IaD is a declarative approach to deployment and management of cloud infrastructure. A user can describe a desired state (e.g., in an idempotent (IDEM) .sls file without specifying precise actions or steps for how to achieve the state. Then, cloud provisioning circuitry can deploy and/or modify the cloud infrastructure to achieve the described state.

As used herein, a .sls file is a file that may contain data and/or instructions for management and configuration of cloud infrastructure, such as that provided by a cloud resource provider through the use of an infrastructure data file (e.g., an IDEM .sls file, a Javascript Object Notation (JSON) file, etc.) instead of a script, deployment and maintenance of cloud infrastructure can be simplified. As used herein, an infrastructure data file is a file which includes declarative statements for deployment and management of cloud infrastructure and/or cloud applications. That is, an infrastructure data file includes statements (e.g., declarative statements) which define a desired state for the infrastructure. The infrastructure data file may specify a state for the infrastructure without defining actions or steps for how to achieve it. Instead, the infrastructure data file is provided to a program which can translate the desired state into actions to deploy the cloud resource.

Cloud resource providers continually create new functionalities and features to provide improved capabilities to consumers. The creation of new functionalities places a signification burden on cloud management platform providers, as the cloud management platform must be updated to interoperate with the new capabilities provided by the cloud resource provider. The challenge to a cloud management platform provider in implementing such capabilities is worsened as the cloud management platform provider must provide updates for multiple cloud resource providers. Thus, integrating additional functionalities into a cloud management platform (e.g., VRA) is a difficult and time-consuming process. As such, feature releases and/or bug fixes for the new features may only be released by cloud management system providers periodically, and customers must wait for the new releases to get their features or bug fixes.

Cloud plugin resources enable simplified utilization of IaD files across existing cloud infrastructure. As used herein, a "cloud plugin resource," "plugin," or "cloud extension" is a software component that adds functionality to a cloud management platform. Such functionality enables instructions that might otherwise require execution external to the cloud management platform to be implemented internal to the cloud management platform without requiring a new version of the cloud management platform to be deployed. As such, cloud management platforms can interface with third-party software providers to develop extensions and/or additional functionality to the cloud management platform. For example, a plugin can support any new cloud resource (e.g., a VM) or provide a new management capability for modification of the cloud resources corresponding to the cloud management platform. Then, the resources can be installed and configured through the cloud resource provider's management console (e.g., an interface, a graphical console, etc.).

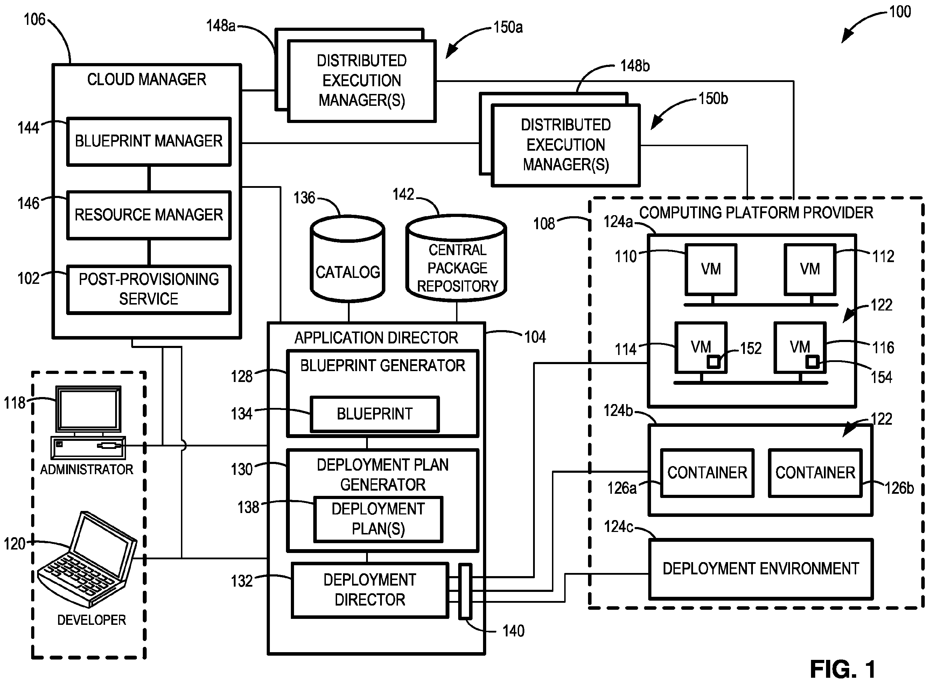

FIG. 1 is a block diagram of an example environment 100 in which an example post-provisioning service 102 operates to provide post-provisioning tasks to computing environments. The example environment 100 includes an example application director 104 and an example cloud manager 106 to manage an example computing platform provider 108 as described in more detail below.

The example computing platform provider 108 provisions virtual computing resources (e.g., example VMs 110, 112, 114, 116) that may be accessed by users of the computing platform (e.g., users associated with an example administrator 118 and/or an example developer 120). An example application 122 implemented via the computing platform provider 108 of FIG. 1 includes the VMs 110, 112, 114, 116. The example VMs 110, 112, 114, 116 provide different functions within the application 122. One or more of the VMs 110, 112, 114, 116 of the illustrated example are customized by the administrator 118 and/or the developer 120 of the application 122 relative to a stock or out-of-the-box (e.g., commonly available purchased copy) version of the services and/or application components. Additionally, the services executing on the example VMs 110, 112, 114, 116 may have dependencies on other ones of the VMs 110, 112, 114, 116.

As illustrated in FIG. 1, the example computing platform provider 108 may provide example deployment environments 124a, 124b, 124c for deployment, testing, staging, and/or production of applications. In some examples, the administrator 118, the developer 120, other programs, and/or other devices may access services from the computing platform provider 108 via Representational State Transfer (RST) Application Programming Interfaces (APIs) and/or via any other client-server communication protocol. Example implementations of REST APIs for cloud computing services includes vRealize Automation (vRA) from VMware, Inc. The example computing platform provider 108 provisions virtual computing resources (e.g., the VMs 110, 112, 114, 116) to provide the deployment environments 124a, 124b, 124c in which the administrator 118 and/or the developer 120 can deploy multi-tier applications.

In some examples, a lighter-weight virtualization is employed by using example containers 126a, 126b in place of the VMs 110, 112, 114, 116 in the development environment 124a. The example containers 126a, 126b are software constructs that run on top of a host operating system without the need for a hypervisor or a separate guest operating system. Unlike VMs, the containers 126a, 126b do not instantiate their own operating systems. Like VMs, the containers 126a, 126b are logically separate from one another. Numerous containers can run on a single computer, processor system and/or in the same development environment 124b. Additionally, the containers 126a, 126b can execute instances of applications or programs (e.g., an example application 122a) separate from application/program instances executed by the other containers in the same development environment 124b.

The example application director 104 of FIG. 1, which may be running in one or more VMs, orchestrates deployment of multi-tier applications onto one of the deployment environments 124a, 124b, 124c. As illustrated in FIG. 1, the example application director 104 includes an example blueprint generator 128, an example deployment plan generator 130, and an example deployment director 132.

The example blueprint generator 128 generates an example blueprint 134 that specifies a logical topology of an application to be deployed. The example blueprint 134 generally captures the structure of an application as a collection of application components executing on virtual computing resources. For example, the blueprint 134 generated by the blueprint generator 128 for an online store application may specify a web application (e.g., in the form of a Java web application archive including dynamic web pages, static web pages, Java servlets, Java classes, and/or other property, configuration and/or resource files that make up a Java web application) executing on an application server that uses a database as a data store. As used herein, the term "application" generally refers to a logical deployment unit, including one or more application packages and their dependent middleware and/or operating systems. Applications may be distributed across multiple VMs. Thus, in the example described above, the term "application" refers to multiple components of the entire online store application, including application server and database components, rather than just the web application itself. In some instances, the application may include the underlying hardware and/or virtual computing hardware utilized to implement the components.

The example blueprint 134 of FIG. 1 may be assembled from items (e.g., templates) from an example catalog 136, which is a listing of available virtual computing resources (e.g., VMs, networking, storage, etc.) that may be provisioned from the computing platform provider 108 and available application components (e.g., software services, scripts, code components, application-specific packages, etc.) that may be installed on the provisioned virtual computing resources. The example catalog may be pre-populated and/or customized by the administrator 118 (e.g., Information Technology (IT) or system administrator) that enters in specifications, configurations, properties, and/or other details about items in the catalog 136. Based on the application, the example blueprint 134 may define one or more dependencies between application components to indicate an installation order of the application components during development.

The example deployment plan generator 130 generates one or more example deployment plane(s) 138 based on one or more blueprints such as the blueprint 134 which includes deployment settings for the blueprint 134 (e.g., virtual computing resource cluster size, memory, networks, etc.) and an execution plan of tasks having a specified order in which virtual computing resources are provisioned and application components are installed, configured, and started. The example deployment plan 138 provides an IT administrator with a process-oriented view of the blueprint 134 that indicates discrete actions to be performed to deploy the application. Different ones of the example deployment plans 138 may be generated from the blueprint 134 to test prototypes (e.g., new application versions), to scale up and/or scale down deployments, and/or to deploy the application to different deployment environments 124a, 124b, 124c (e.g., testing, staging, production, etc.). The example deployment plan 138 is separated and distributed as local deployment plans having a series of tasks to be executed by the VMs 110, 112, 114, 116 provisioned from the deployment environment 124a. Each one of the example VMs 110, 112, 114, 116 coordinates execution of each task with a centralized deployment module (e.g., the deployment director 132) to ensure the tasks are executed in an order that complies with dependencies specified in the blueprint 134. In some examples, tasks executed by the VMs 110, 112, 114, 116 during deployment may be referred to as "dayl tasks," "dayl operations," "provisioning tasks," or "deployment tasks." Some examples of provisioning tasks include configuring a memory of an example VM, configuring a central processing unit (CPU) of an example VM, etc.

The example deployment director 132 executes the deployment plan 138 by communicating with the computing platform provider 108 via an example interface 140 to provision and configure the VMs 110, 112, 114, 116 in the deployment environment 124a. The example interface 140 provides a communication abstraction layer by which the application director 104 may communicate with a heterogeneous mixture of the computing platform provider 108 and deployment environments 124a, 124b, 124c. The example deployment director 132 provides each of the VMs 110, 112, 114, 116 with a series of tasks (e.g., provisioning tasks, day1 operations, etc.) specific to each of the receiving VMs 110, 112, 114, 116 (herein referred to as a "local deployment plan"). The example provisioning tasks are executed by the VMs 110, 112, 114, 116 to install, configure, and/or start one or more application components. For example, a provisioning task may be a script that, when executed by one of the VMs 110, 112, 114, 116, causes the one of the VMs 110, 112, 114, 116 to retrieve and install particular software packages from an example central package repository 142. The example deployment director 132 coordinates with the VMs 110, 112, 114, 116 to execute the provisioning tasks in an order that observes installation dependencies between VMs 110, 112, 114, 116 according to the deployment plan 138. After the application has been deployed, the example application director 104 may be utilized to monitor and/or modify (e.g., scale) the deployment.

The example cloud manager 106 of FIG. 1 interacts with the components of the environment 100 (e.g., the application director 104 and the computing platform provider 108) to facilitate the management of the deployed VMs 110, 112, 114, 116 in the computing platform provider 108. For example, the cloud manager 106 can perform (e.g., implement, execute, etc.) post-provisioning tasks on the VMs 110, 112, 114, 116, the containers 126a, 126b, etc., in the deployment environments 124a, 124b, 124c. As used herein, a "post-provisioning task," a "post-deployment task," a "day2 task," or a "day2 operation" is a follow-up task performed on a provisioned resource after a VM is deployed. In some examples, a post-provisioning task is sometimes referred to as a day2 task because post-provisioning tasks are performed after provisioning tasks (e.g., day1 operations) are complete (e.g., any time after, such as the day after, provisioning is complete). Some examples of post-provisioning tasks include tasks to add memory and/or reconfigure memory of the deployed VM to a certain memory value, tasks to reconfigure a CPU of the deployed VM, etc. Other example post-provisioning tasks include tasks to add additional disks, tasks to add additional network adapters, customization tasks to apply a customization specification to the deployed VM, removal of an example VM from a deployment environment, etc.

The example cloud manager 106 includes an example blueprint manager 144, an example resource manager 146, and the example post-provisioning service 102. The example blueprint manager 144 implements post-provisioning tasks in the deployment environment 124a. The example environment 100 may include first and second distributed execution manager(s) (DEM(s)) 148a and 1448b to execute the post-provisioning tasks. The first example DEM 148a includes a first set of characteristics and is physically located at a first example location 150a. The second example DEM 148b includes a second set of characteristics and is physically located at a second example location 150b. The location and characteristics of a DEM may make that DEM more suitable for performing certain post-provisioning tasks. For example, a DEM may include hardware particularly suited for performance of certain post-provisioning tasks (e.g., high-end calculations), may be located in a desired area (e.g., for compliance with local laws that require certain post-provisioning tasks to be physically performed within a country's boundaries), may specify a location or distance to other DEMs for selecting a nearby DEM (e.g., for reducing data transmission latency), etc. The example resource manager 146 can reclaim unused cloud resources. In other words, the example resource manager 146 of the illustrated example facilitates execution of post-provisioning tasks that recover computing resources of the computing platform provider 108 that are no longer being actively utilized.

The example post-provisioning service 102 transforms post-provisioning tasks to be used on example plugins 152, 154 (e.g., IDEM cloud plugin resources) in the deployment environment 124a. In the example of FIG. 1, the VMs 110, 112 are associated with a first file format such as Java. As such, example post-provisioning tasks implemented on the VMs 110, 112 (via the cloud manager 106) are also associated with Java. Alternatively, the VMs 114, 116 are associated with a second file format such as IDEM. As such, the post-provisioning tasks (written in Java) are not compatible with the VMs 114, 116 (written in IDEM) and may limit the implementation of these post-provisioning tasks on the VMs 114, 116. However, the example VMs 114, 116 include the example plugins 152, 154 to provide such a functionality and compensate for these execution difficulties. As previously mentioned, an example plugin can enable instructions (e.g., a post-provisioning task) that might otherwise require execution external to the cloud management platform to be implemented internal to the cloud management platform without requiring a new version of the cloud management platform (e.g., the deployment environment 124a) to be deployed. In examples disclosed herein, the plugins 152, 154 can receive instructions (e.g., an executable file, a post-provisioning task, etc.) from the cloud manager 106 and implement such instructions on the VMs 114, 116 without requiring a new version of the VMs 114, 116, the deployment environment 124a, the blueprint 134, etc.

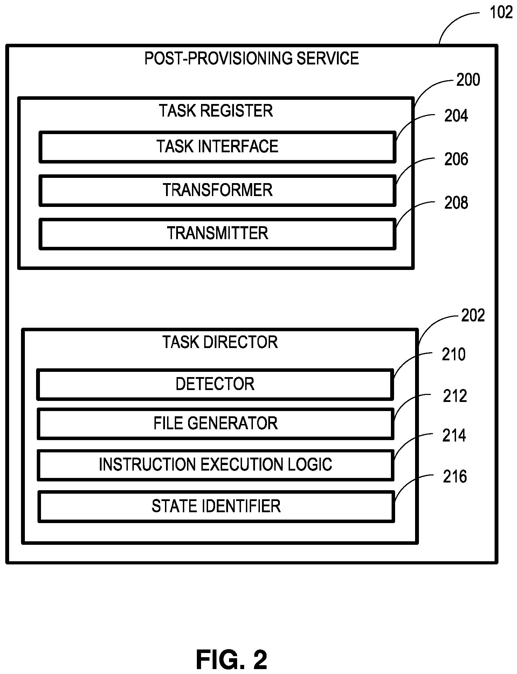

FIG. 2 is a block diagram of an example implementation of the post-provisioning service 102 of FIG. 1 to transform post-provisioning tasks for execution on the plugins 152, 154. The example post-provisioning service 102 includes an example task register 200 and an example task director 202. The example task register 200 includes an example task interface 204, an example transformer 206, and an example transmitter 208. The example task director 202 includes an example detector 210, an example file generator 212, an example instruction execution logic 214, and an example state identifier 216. The post-provisioning service 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the post-provisioning service 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example task register 200 compiles (e.g., collects, generates, etc.) post-provisioning tasks to be implemented on and/or modify the plugins 152, 154 and, subsequently, the VMs 114, 116. The example task register 200 includes the task interface 204, the transformer 206, and the transmitter 208. The example task interface 204 obtains (e.g., accesses) metadata associated with an example post-provisioning task. For example, the task interface 204 obtains arguments, parameters (e.g., input parameters), identifiers, etc., associated with the example post-provisioning task. In some examples, the metadata includes information pertaining to the resource type to which the post-provisioning task applies. Additionally or alternatively, the metadata includes a file path associated with the post-provisioning task. In some examples, the task interface 204 is communicatively coupled to the cloud manager 106. The example task interface 204 can monitor and/or access the post-provisioning tasks that the cloud manager 406 implements on the VMs 110, 112. In this example, the VMs 110, 112 are compatible with the first file format and, thus, the example post-provisioning tasks (that the cloud manager 106 implements on the VMs 110, 112) are written in the first file format. As such, the example metadata obtained by the task interface 204 is written in the first file format.

The example transformer 206 transforms (e.g., converts) the metadata from the first file format to a second file format. The example transformer 206 transforms the metadata from Java into a file format that is compatible with the plugins 152, 154 and, thus, the VMs 114, 116. For example, if the plugins 152, 154 and/or the VMs 114, 116 are associated with an IDEM file format, then the example transformer 206 can transform the metadata from a Java file format to an IDEM file format (e.g., a second file format).

The example transmitter 208 registers (e.g., transmits, sends, etc.) the post-provisioning task in an example deployment environment. For example, the transmitter 208 registers the post-provisioning task in the deployment environment 124a. Accordingly, the post-provisioning task can be selected or accessed via an example user interface to implement the post-provisioning task on the plugins 152, 154. In some examples, the transmitter 208 stores the metadata in an example database (e.g., an example database associated with the deployment environment 124a and/or the cloud manager 106).

In some examples, the task register 200 is instantiated by programmable circuitry executing registering instructions and/or configured to perform operations such as those represented by the flowchart of FIG. 5. In some examples, the task interface 204 is instantiated by programmable circuitry executing accessing instructions and/or configured to perform operations such as those represented by the flowchart of FIG. 5. In some examples, the transformer 206 is instantiated by programmable circuitry executing transformation instructions and/or configured to perform operations such as those represented by the flowchart of FIG. 5. In some examples, the transmitter 208 is instantiated by programmable circuitry executing transmission instructions and/or configured to perform operations such as those represented by the flowchart of FIG. 5.

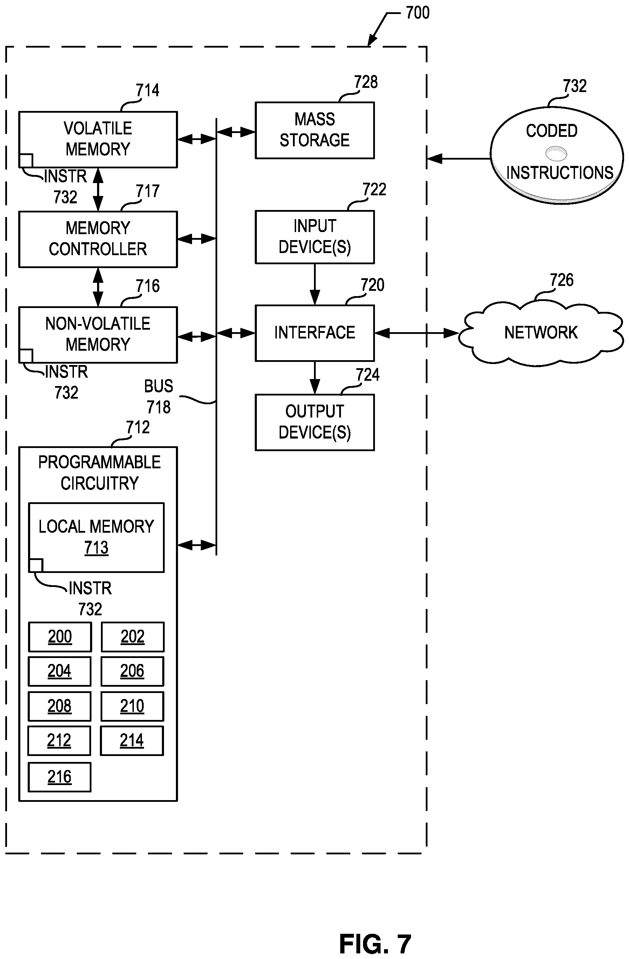

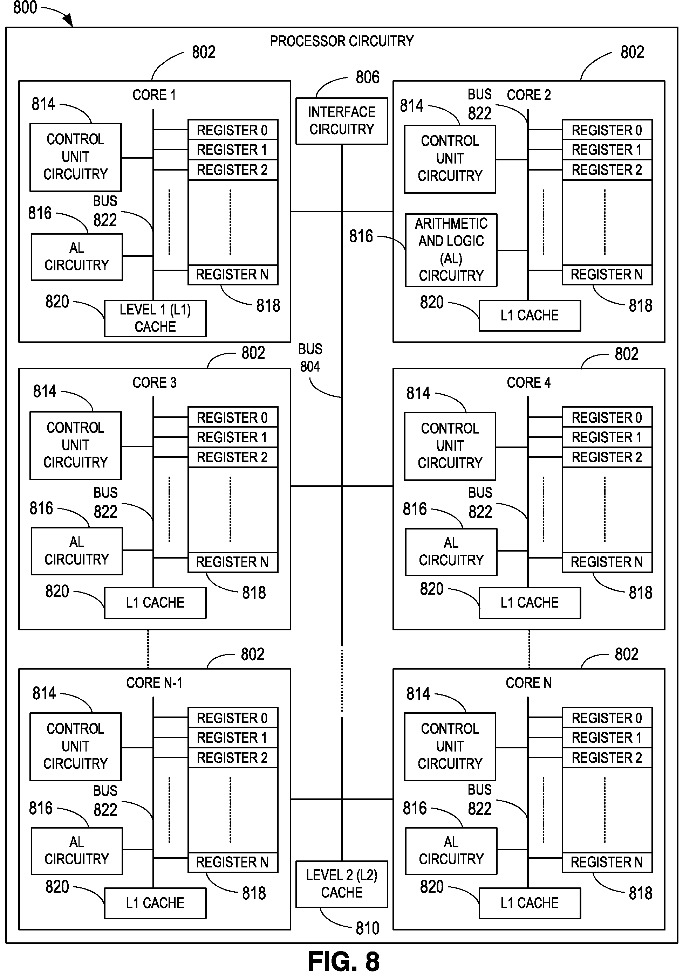

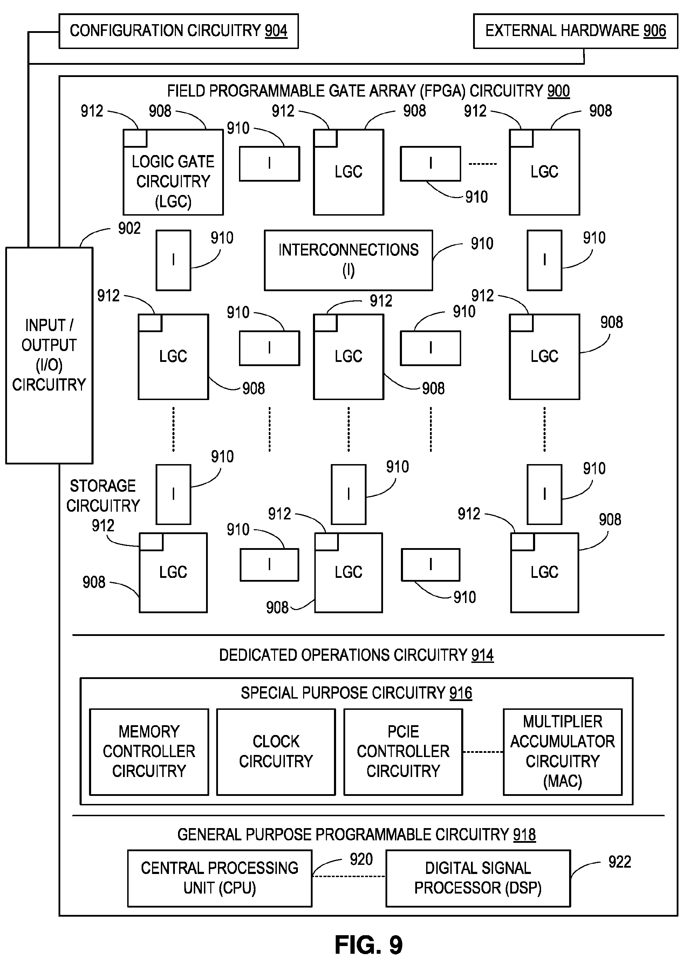

In some examples, the post-provisioning service 102 includes means for collecting post-provisioning tasks. For example, the means for determining may be implemented by task register circuitry such as the example task register 200. In some examples, the example task register 200 may be instantiated by programmable circuitry such as the example programmable circuitry 712 of FIG. 7. For instance, the example task register 200 may be instantiated by the example microprocessor 800 of FIG. 8 executing machine executable instructions such as those implemented by at least blocks 508 of FIG. 5. In some examples, the example task register 200 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example task register 200 may be instantiated by any other combination of hardware, software, and/or firmware. For example, the example task register 200 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for collecting post-provisioning tasks includes means for accessing metadata. For example, the means for accessing may be implemented by task interface circuitry such as the example task interface 204. In some examples, the example task interface 204 may be instantiated by programmable circuitry such as the example programmable circuitry 712 of FIG. 7. For instance, the example task interface 204 may be instantiated by the example microprocessor 800 of FIG. 8 executing machine executable instructions such as those implemented by at least blocks 502 of FIG. 5. In some examples, the example task interface 204 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example task interface 204 may be instantiated by any other combination of hardware, software, and/or firmware. For example, the example task interface 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for collecting post-provisioning tasks includes means for transforming. For example, the means for transforming may be implemented by transformer circuitry such as the example transformer 206. In some examples, the example transformer 206 may be instantiated by programmable circuitry such as the example programmable circuitry 712 of FIG. 7. For instance, the example transformer 206 may be instantiated by the example microprocessor 800 of FIG. 8 executing machine executable instructions such as those implemented by at least blocks 504 of FIG. 5. In some examples, the example transformer 206 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example transformer 206 may be instantiated by any other combination of hardware, software, and/or firmware. For example, the example transformer 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for collecting post-provisioning tasks includes means for transmitting. For example, the means for transmitting may be implemented by transmitter circuitry such as the example transmitter 208. In some examples, the example transmitter 208 may be instantiated by programmable circuitry such as the example programmable circuitry 712 of FIG. 7. For instance, the example transmitter 208 may be instantiated by the example microprocessor 800 of FIG. 8 executing machine executable instructions such as those implemented by at least blocks 506, 510 of FIG. 5. In some examples, the example transmitter 208 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example transmitter 208 may be instantiated by any other combination of hardware, software, and/or firmware. For example, the example transmitter 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example task director 202 implements (e.g., executes) post-provisioning tasks collected by the task register 200. For example, the task director 202 executes an example transformed post-provisioning task on at least one of the plugins 152, 154. The example task director 202 includes the detector 210, the file generator 212, the instruction execution logic 214, and the state identifier 216. The example detector 210 detects (e.g., accesses) a request to initiate the post-provisioning task. For example, the detector 210 can access a request via a user interface associated with an example computing device that accesses at least one of the plugins 152, 154 via the deployment environment 124a. Further, the example detector 210 can access a request to initiate the post-provisioning task on the at least one of the plugins 152, 154 that have been provisioned (e.g., deployed) in the deployment environment 124a.

The example file generator 212 generates an executable file including first instructions to implement the post-provisioning task and second instructions to return a state of the plugin (e.g., at least one of the plugins 152, 154). For example, the file generator 212 generates an executable file that contains data and/or instructions for management and configuration of the VMs 114, 116 and the plugins 152, 154 through the use of a data file (e.g., an IDEM file, a .sls file, a javascript object notation (JSON) file, etc.) instead of a script. Further, the example executable file can include statements to identify and/or define a state associated with the plugins 152, 154 and/or the VMs 114, 116. The example file generator 212 can generate an executable file having the second file format (e.g., IDEM or VMware cloud template (VCT)). In particular, the example executable file generated by the file generator 212 includes first instructions including the transformed post-provisioning task (in the second file format (e.g., IDEM)) and the second instructions to return a state of at least one of the plugins 152, 154 (in the second file format (e.g., IDEM)). In some examples, the file generator 212 generates the executable file such that the second instructions depend on the first instructions. In other words, the example file generator 212 can generate the executable file such that the second instruction execute only after completion of the first instructions.

The example instruction execution logic 214 executes (e.g., implements, runs, etc.) to example executable file. For example, the instruction execution logic 214 executes the executable file by executing the first instructions by implementing the transformed post-provisioning task on the at least one of the plugins 152, 154 and executing the second instructions (to return a state of at least one of the plugins 152, 154) after completion of the transformed post-provisioning task.

The example state identifier 216 determines the state of the at least one of the plugins 152, 154 based on an output of the executed second instructions. In some examples, the state identifier 216 determines the state of the at least one of the plugins 152, 154 as stopped, resumed, started, deleted, etc.

In some examples, the task director 202 is instantiated by programmable circuitry executing direction instructions and/or configured to perform operations such as those represented by the flowchart of FIG. 6. In some examples, the detector 210 is instantiated by programmable circuitry executing accessing instructions and/or configured to perform operations such as those represented by the flowchart of FIG. 6. In some examples, the file generator 212 is instantiated by programmable circuitry executing generating instructions and/or configured to perform operations such as those represented by the flowchart of FIG. 6. In some examples, the instruction execution logic 214 is instantiated by programmable circuitry executing implementation instructions and/or configured to perform operations such as those represented by the flowchart of FIG. 6. In some examples, the state identifier 216 is instantiated by programmable circuitry executing identification instructions and/or configured to perform operations such as those represented by the flowchart of FIG. 6.

In some examples, the post-provisioning service 102 includes means for directing post-provisioning tasks. For example, the means for directing may be implemented by task director circuitry such as the example task director 202. In some examples, the example task director 202 may be instantiated by programmable circuitry such as the example programmable circuitry 712 of FIG. 7. For instance, the example task director 202 may be instantiated by the example microprocessor 800 of FIG. 8 executing machine executable instructions such as those implemented by FIG. 6. In some examples, the example task director 202 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example task director 202 may be instantiated by any other combination of hardware, software, and/or firmware. For example, the example task director 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for directing post-provisioning tasks includes means for accessing. For example, the means for accessing may be implemented by detector circuitry such as the example detector 210. In some examples, the example detector 210 may be instantiated by programmable circuitry such as the example programmable circuitry 712 of FIG. 7. For instance, the example detector 210 may be instantiated by the example microprocessor 800 of FIG. 8 executing machine executable instructions such as those implemented by at least blocks 604 of FIG. 6. In some examples, the example detector 210 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the example detector 210 may be instantiated by any other combination of hardware, software, and/or firmware. For example, the example detector 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for directing post-provisioning tasks includes means for generating a file. For example, the means for generating a file may be implemented by file generator circuitry such as the example file generator 212. In some examples, the file generator 212 may be instantiated by programmable circuitry such as the example programmable circuitry 712 of FIG. 7. For instance, the file generator 212 may be instantiated by the example microprocessor 800 of FIG. 8 executing machine executable instructions such as those implemented by at least blocks 606 of FIG. 6. In some examples, the file generator 212 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the file generator 212 may be instantiated by any other combination of hardware, software, and/or firmware. For example, the file generator 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for directing post-provisioning tasks includes means for executing an executable file. For example, the means for executing may be implemented by executor circuitry such as the example instruction execution logic 214. In some examples, the instruction execution logic 214 may be instantiated by programmable circuitry such as the example programmable circuitry 712 of FIG. 7. For instance, the instruction execution logic 214 may be instantiated by the example microprocessor 800 of FIG. 8 executing machine executable instructions such as those implemented by at least blocks 608, 610, 612 of FIG. 6. In some examples, the instruction execution logic 214 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the instruction execution logic 214 may be instantiated by any other combination of hardware, software, and/or firmware. For example, the instruction execution logic 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for directing post-provisioning tasks includes means for identifying a state. For example, the means for identifying a state may be implemented by state identifier circuitry such as the example state identifier 216. In some examples, the state identifier 216 may be instantiated by programmable circuitry such as the example programmable circuitry 712 of FIG. 7. For instance, the state identifier 216 may be instantiated by the example microprocessor 800 of FIG. 8 executing machine executable instructions such as those implemented by at least blocks 614 of FIG. 6. In some examples, the state identifier 216 may be instantiated by hardware logic circuitry, which may be implemented by an ASIC, XPU, or the FPGA circuitry 900 of FIG. 9 configured and/or structured to perform operations corresponding to the machine readable instructions. Additionally or alternatively, the state identifier 216 may be instantiated by any other combination of hardware, software, and/or firmware. For example, the state identifier 216 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

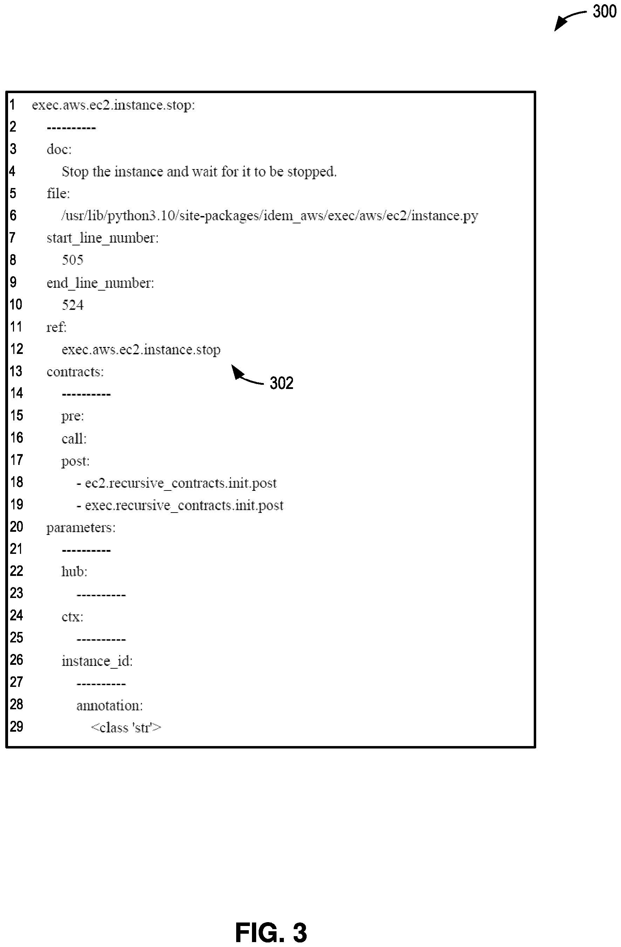

FIG. 3 illustrates a first example implementation of the post-provisioning service 102 (e.g., the task register 200). In particular, the example in FIG. 3 illustrates example metadata 300 associated with an example post-provisioning task. In FIG. 3, the example post-provisioning task is shown as an example "exec" function 302. In IDEM, an example "exec" function can represent a post-provisioning task. In other words, running or executing the "exec" function 302 can initiate the post-provisioning task. The example "exec" function 302 in this example is "exec.aws.ec2.instance.stop." Put differently, the example post-provisioning task is an instruction to "stop" the resource (Elastic Compute Cloud (EC2) Instance) provided by an example cloud platform provider (Amazon Web Services (AWS)). In the example of FIG. 3, the exec function 302 is written in an IDEM file format (e.g., the second file format). In particular, the exec function 302 is transformed in the IDEM file format (shown in FIG. 3) from another file format different from IDEM (e.g., Java).

The example metadata 300 associated with the post-provisioning task describes the code or instructions to execute the task including any inputs the code may need to complete execution of the task. The example metadata 300 associated with the exec function 302 illustrated in FIG. 3 includes a description of the task ("Stop the instance and wait for it to be stopped"), a file path indicating a storage location of the task (e.g., "/usr/lib/python3.10/site-packages/idem_aws/exec/aws/ec2/instance.py," "start_line_number," "end_line_number," etc.), parameters (e.g., "hub," "ctx" (context), identifiers such as "instance_id," etc.), etc. The example task interface 204 can access the example metadata 300 illustrated in connection with the exec function 302 illustrated in FIG. 3. Other example post-provisioning tasks include "exec.aws.ec2.instance.start," "exec.aws.ec2.instance.resume," "exec.aws.ec2.instance.delete," "exec.aws.ec2.instance.deallocate," "exec.azure.compute.virtual_machines.power.off," "exec.azure.compute.virtual_machines.restart," etc. In some examples, the example task interface 204 can access the metadata 300. For example, the task interface 204 can access the metadata 300 based on a command line interface (CLI) subcommand that returns metadata about an example exec function associated with a post-provisioning task.

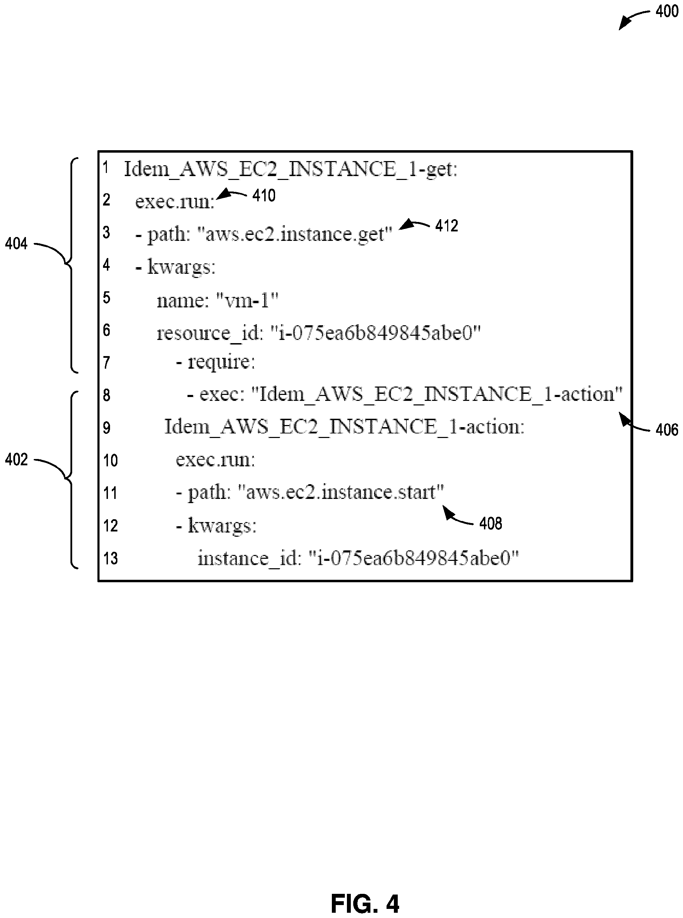

FIG. 4 illustrates a second example implementation of the post-provisioning service 102 (e.g., the task director 202). In particular, the example of FIG. 4 illustrates an example executable file 400 constructed in accordance with teachings of this disclosure. The example executable file 400 includes first example instructions 402 and second example instructions 404. The first example instructions 402 include an example post-provisioning task. In this example, the post-provisioning task is an example exec function 406 that calls "Idem AWS EC2 INSTANCE_1-action" for execution. This example exec function 406, "Idem AWS EC2 INSTANCE_1-action," is defined in the code at lines 9-13. However, the example exec function can be defined at any location in the code (e.g., lines 20-24, lines 32-37, etc.) or at any location external to the code (e.g., a database). The example exec function 406 initiates the post-provisioning task "aws.ec2.instance.start" 408. This example task is similar to the post-provisioning task described in connection with FIG. 3, but, instead, "aws.ec2.instance.start" is an instruction to "start" the resource (EC2 Instance) provided by the example cloud platform provider (AWS). In the example of FIG. 4, this exec function is written in an IDEM file format.

The second example instructions 404 include an example exec function 410 to return a state of a plugin (e.g., the plugin 152, the plugin 154, etc.). For example, the second instructions 404 includes a "get" function "aws.ec2.instance.get" 412 to return a state of the example plugin. Further, the second example instructions 404 include a dependency at line 7. As such, the second example instructions 404 depend on execution of the first example instructions 402. In other words, the example executable file 400 can "require" that the first instructions 402 execute prior to the second instructions 404. Thus, the executable file 400 will return the state of the example plugin (the second instructions 404) only after that post-provisioning task (the first instructions 402) has been completed. In some examples, the file generator 212 can generate the executable file 400.

While an example manner of implementing the post-provisioning service 102 of FIG. 1 is illustrated in FIG. 2, one or more of the elements, processes, and/or devices illustrated in FIG. 2 may be combined, divided, re-arranged, omitted, eliminated, and/or implemented in any other way. Further, the example task register 200, the example task interface 204, the example transformer 206, the example transmitter 208, the example task director 202, the example detector 210, the example file generator 212, the example instruction execution logic 214, the example state identifier 216, and/or, more generally, the example post-provisioning service 102 of FIG. 2, may be implemented by hardware alone or by hardware in combination with software and/or firmware. Thus, for example, any of the example task register 200, the example task interface 204, the example transformer 206, the example transmitter 208, the example task director 202, the example detector 210, the example file generator 212, the example instruction execution logic 214, the example state identifier 216 and/or, more generally, the example post-provisioning service 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example post-provisioning service 102 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the post-provisioning service 102 of FIG. 2 and/or representative of example operations which may be performed by programmable circuitry to implement and/or instantiate the post-provisioning service 102 of FIG. 2, are shown in FIGS. 5 and 6. The machine readable instructions may be one or more executable programs or portion(s) of one or more executable programs for execution by programmable circuitry such as the programmable circuitry 712 shown in the example programmable circuitry platform 700 discussed below in connection with FIG. 7 and/or may be one or more function(s) or portion(s) of functions to be performed by the example programmable circuitry (e.g., an FPGA) discussed below in connection with FIGS. 8 and/or 9. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 5 and 6, many other methods of implementing the example post-provisioning service 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 5 and 6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 5 is a flowchart representative of example machine readable instructions and/or example operations 500 that may be executed, instantiated, and/or performed by programmable circuitry to collect post-provisioning tasks to be implemented on the plugins 152, 154. The example machine-readable instructions and/or the example operations 500 of FIG. 5 begin at block 502, at which the example task interface 204 obtains metadata associated with an example post-provisioning task. For example, the post-provisioning task is to modify an example plugin and the metadata is represented in accordance with a first file format. The example task interface 204 may obtain metadata (e.g., arguments, parameters, inputs, identifiers, file paths, etc.) associated with an example post-provisioning task. In some examples, the task interface 204 is communicatively coupled to the cloud manager 106. The example task interface 204 can monitor and/or access the post-provisioning tasks that the cloud manager 106 implements on the VMs 110, 112. In this example, the VMs 110, 112 are compatible with the first file format and, thus, the example post-provisioning tasks (that the cloud manager 106 implements on the VMs 110, 112) are written in the first file format. As such, the example metadata obtained by the task interface 204 is written in the first file format.

At block 504, the example transformer 206 transforms the metadata from the first file format to a second example file format (IDEM). For example, the transformer 206 transforms the metadata from a Java file format to an IDEM file format. Thus, the example transformer 206 can transform the metadata into a file format that is compatible with the plugins 152, 154, and, thus, the VMs 114, 116. For example, the metadata 300 represents transformed metadata associated with the post-provisioning task "exec.aws.instance.stop" 302 of FIG. 3.

At block 506, the example transmitter 208 stores the metadata in an example database. For example, the transmitter 208 can store the metadata 300 in an example database associated with the deployment environment 124a and/or associated with the cloud manager 106.

At block 508, the example task register 200 determines whether there are additional post-provisioning task(s) to transform. If the example task register 200 determines that there are additional post-provisioning task(s) to transform (e.g., from the cloud manager 106), then control returns to block 502. In some examples, the task register 200 can determine whether there are additional post-provisioning task(s) to transform periodically (e.g., every 24 hours) or aperiodically. Alternatively, if the example task register 200 determines that there are no additional post-provisioning task(s) to transform, then control proceeds to block 510.

At block 510, the example transmitter 208 registers the post-provisioning task(s) in an example deployment environment 124a. For example, the transmitter 208 can register the transformed post-provisioning task(s) (e.g., the post-provisioning task "aws.ec2.instance.stop" 302 of FIG. 3, the post-provisioning task "aws.ec2.instance.start" 408 of FIG. 4, etc.) and example metadata (e.g., the metadata 300) in the deployment environment 124a. Additionally, the example transmitter 208 can register the post-provisioning task(s) (e.g., a list of the post-provisioning task(s)) in an example user interface available for user selection (e.g., via the deployment environment 124a). The example instructions and/or operations 500 end.

FIG. 6 is a flowchart representative of example machine readable instructions and/or example operations 600 that may be executed, instantiated, and/or performed by programmable circuitry to execute an example transformed post-provisioning task on at least one of the plugins 152, 154. The example machine-readable instructions and/or the example operations 600 of FIG. 6 begin at block 602, at which the example computing platform provider 108 provisions an example plugin in an example deployment environment. For example, the computing platform provider 108 provisions the plugin 152 and the plugin 154 to be included in the VMs 114, 116 in the deployment environment 124a.

At block 604, the example detector 210 accesses an example request to initiate a first one of the post-provisioning task(s). For example, the detector 210 can access a request to initiate the post-provisioning task "aws.ec2.instance.start" 408 of FIG. 4.

At block 606, the example file generator 212 generates an executable file. For example, the file generator 212 generates an executable file including first instructions to implement the first one of the post-provisioning task(s) and second instructions to determine a state of the plugin. The example file generator 212 may generate the executable file 400 to include the first instructions 402 to implement the post-provisioning task "aws.ec2.instance.start" 408 and the second instructions 404 to determine a state of at least one of the plugins 152, 154. In addition, the example file generator 212 generates the executable file 400 such that the first instructions 402 and the second instructions 404 are written in the second file format (IDEM).

At block 608, the example instruction execution logic 214 executes the executable file on the plugin in the deployment environment. For example, the instruction execution logic 214 executes the executable file 400 on at least one of the plugins 152, 154 in the deployment environment 124a.

At block 610, the example instruction execution logic 214 executes the first instructions. For example, the instruction execution logic 214 executes the first instructions 402 to implement the post-provisioning task "aws.ec2.instance.start" 408 on at least one of the plugins 152, 154.

At block 612, the example instruction execution logic 214 executes the second instructions. For example, the instruction execution logic 214 executes the second instructions 404 to determine a state of the at least one of the plugins 152, 154. In this example, the instruction execution logic 214 executes the second instructions 404 only after the first instructions 402 have completed execution. For example, the instruction execution logic 214 executes the second instructions 404 only after the post-provisioning task "aws.ec2.instance.start" 408 has completed execution (e.g., starting the resource).

At block 614, the example state identifier 216 determines the state of the plugin based on the executed second instructions. For example, the state identifier 216 determines the state of the at least one of the plugins 152, 154 as "started." The example instruction and/or operations 600 of FIG. 6 end.

FIG. 7 is a block diagram of an example programmable circuitry platform 700 structured to execute and/or instantiate the example machine-readable instructions and/or the example operations of FIGS. 5 and 6 to implement the post-provisioning service 102 of FIG. 2. The programmable circuitry platform 700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 700 of the illustrated example includes programmable circuitry 712. The programmable circuitry 712 of the illustrated example is hardware. For example, the programmable circuitry 712 can be implemented by one or more integrated circuits, logic circuits, FPGAs, microprocessors, CPUs, GPUs, DSPs, and/or microcontrollers from any desired family or manufacturer. The programmable circuitry 712 may be implemented by one or more semiconductor based (e.g., silicon based) devices. In this example, the programmable circuitry 712 implements the example task register 200, the example task interface 204, the example transformer 206, the example transmitter 208, the example task director 202, the example detector 210, the example file generator 212, the example instruction execution logic 214, and the example state identifier 216.

The programmable circuitry 712 of the illustrated example includes a local memory 713 (e.g., a cache, registers, etc.). The programmable circuitry 712 of the illustrated example is in communication with main memory 714, 716, which includes a volatile memory 714 and a non-volatile memory 716, by a bus 718. The volatile memory 714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 716 may be implemented by flash memory and/or any other desired type of memory device. Access to the main memory 714, 716 of the illustrated example is controlled by a memory controller 717. In some examples, the memory controller 717 may be implemented by one or more integrated circuits, logic circuits, microcontrollers from any desired family or manufacturer, or any other type of circuitry to manage the flow of data going to and from the main memory 714, 716.

The programmable circuitry platform 700 of the illustrated example also includes interface circuitry 720. The interface circuitry 720 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 722 are connected to the interface circuitry 720. The input device(s) 722 permit(s) a user (e.g., a human user, a machine user, etc.) to enter data and/or commands into the programmable circuitry 712. The input device(s) 722 can be implemented by, for example, an audio sensor, a microphone, a camera (still or video), a keyboard, a button, a mouse, a touchscreen, a trackpad, a trackball, an isopoint device, and/or a voice recognition system.

One or more output devices 724 are also connected to the interface circuitry 720 of the illustrated example. The output device(s) 724 can be implemented, for example, by display devices (e.g., a light emitting diode (LED), an organic light emitting diode (OLED), a liquid crystal display (LCD), a cathode ray tube (CRT) display, and/or an in-place switching (IPS) display, a touchscreen, etc.). The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 700 of the illustrated example also includes one or more mass storage discs or devices 728 to store firmware, software, and/or data. Examples of such mass storage discs or devices 728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 732, which may be implemented by the machine readable instructions of FIGS. 5 and 6, may be stored in the mass storage device 728, in the volatile memory 714, in the non-volatile memory 716, and/or on at least one non-transitory computer readable storage medium such as a CD or DVD which may be removable.

FIG. 8 is a block diagram of an example implementation of the programmable circuitry 712 of FIG. 7. In this example, the programmable circuitry 712 of FIG. 7 is implemented by a microprocessor 800. For example, the microprocessor 800 may be a general-purpose microprocessor (e.g., general-purpose microprocessor circuitry). The microprocessor 800 executes some or all of the machine-readable instructions of the flowcharts of FIGS. 5 and 6 to effectively instantiate the circuitry of FIG. 2 as logic circuits to perform operations corresponding to those machine readable instructions. In some such examples, the circuitry of FIG. 2 is instantiated by the hardware circuits of the microprocessor 800 in combination with the machine-readable instructions. For example, the microprocessor 800 may be implemented by multi-core hardware circuitry such as a CPU, a DSP, a GPU, an XPU, etc. Although it may include any number of example cores 802 (e.g., 1 core), the microprocessor 800 of this example is a multi-core semiconductor device including N cores. The cores 802 of the microprocessor 800 may operate independently or may cooperate to execute machine readable instructions. For example, machine code corresponding to a firmware program, an embedded software program, or a software program may be executed by one of the cores 802 or may be executed by multiple ones of the cores 802 at the same or different times. In some examples, the machine code corresponding to the firmware program, the embedded software program, or the software program is split into threads and executed in parallel by two or more of the cores 802. The software program may correspond to a portion or all of the machine readable instructions and/or operations represented by the flowcharts of FIGS. 5 and 6.

The cores 802 may communicate by a first example bus 804. In some examples, the first bus 804 may be implemented by a communication bus to effectuate communication associated with one(s) of the cores 802. For example, the first bus 804 may be implemented by at least one of an Inter-Integrated Circuit (I2C) bus, a Serial Peripheral Interface (SPI) bus, a PCI bus, or a PCIe bus. Additionally or alternatively, the first bus 804 may be implemented by any other type of computing or electrical bus. The cores 802 may obtain data, instructions, and/or signals from one or more external devices by example interface circuitry 806. The cores 802 may output data, instructions, and/or signals to the one or more external devices by the interface circuitry 806. Although the cores 802 of this example include example local memory 820 (e.g., Level 1 (L1) cache that may be split into an L1 data cache and an L1 instruction cache), the microprocessor 800 also includes example shared memory 810 that may be shared by the cores (e.g., Level 2 (L2 cache)) for high-speed access to data and/or instructions. Data and/or instructions may be transferred (e.g., shared) by writing to and/or reading from the shared memory 810. The local memory 820 of each of the cores 802 and the shared memory 810 may be part of a hierarchy of storage devices including multiple levels of cache memory and the main memory (e.g., the main memory 714, 716 of FIG. 7). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 802 may be referred to as a CPU, DSP, GPU, etc., or any other type of hardware circuitry. Each core 802 includes control unit circuitry 814, arithmetic and logic (AL) circuitry (sometimes referred to as an ALU) 816, a plurality of registers 818, the local memory 820, and a second example bus 822. Other structures may be present. For example, each core 802 may include vector unit circuitry, single instruction multiple data (SIMD) unit circuitry, load/store unit (LSU) circuitry, branch/jump unit circuitry, floating-point unit (FPU) circuitry, etc. The control unit circuitry 814 includes semiconductor-based circuits structured to control (e.g., coordinate) data movement within the corresponding core 802. The AL circuitry 816 includes semiconductor-based circuits structured to perform one or more mathematic and/or logic operations on the data within the corresponding core 802. The AL circuitry 816 of some examples performs integer based operations. In other examples, the AL circuitry 816 also performs floating-point operations. In yet other examples, the AL circuitry 816 may include first AL circuitry that performs integer-based operations and second AL circuitry that performs floating-point operations. In some examples, the AL circuitry 816 may be referred to as an Arithmetic Logic Unit (ALU).

The registers 818 are semiconductor-based structures to store data and/or instructions such as results of one or more of the operations performed by the AL circuitry 816 of the corresponding core 802. For example, the registers 818 may include vector register(s), SIMD register(s), general-purpose register(s), flag register(s), segment register(s), machine-specific register(s), instruction pointer register(s), control register(s), debug register(s), memory management register(s), machine check register(s), etc. The registers 818 may be arranged in a bank as shown in FIG. 8. Alternatively, the registers 818 may be organized in any other arrangement, format, or structure, such as by being distributed throughout the core 802 to shorten access time. The second bus 822 may be implemented by at least one of an I2C bus, a SPI bus, a PCI bus, or a PCIe bus.

Each core 802 and/or, more generally, the microprocessor 800 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 800 is a semiconductor device fabricated to include many transistors interconnected to implement the structures described above in one or more integrated circuits (ICs) contained in one or more packages.

The microprocessor 800 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 800, in the same chip package as the microprocessor 800 and/or in one or more separate packages from the microprocessor 800.

FIG. 9 is a block diagram of another example implementation of the programmable circuitry 712 of FIG. 7. In this example, the programmable circuitry 712 is implemented by FPGA circuitry 900. For example, the FPGA circuitry 900 may be implemented by an FPGA. The FPGA circuitry 900 can be used, for example, to perform operations that could otherwise be performed by the example microprocessor 800 of FIG. 8 executing corresponding machine readable instructions. However, once configured, the FPGA circuitry 900 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 800 of FIG. 8 described above (which is a general purpose device that may be programmed to execute some or all of the machine readable instructions represented by the flowchart(s) of FIGS. 5 and 6 but whose interconnections and logic circuitry are fixed once fabricated), the FPGA circuitry 900 of the example of FIG. 9 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 5 and 6. In particular, the FPGA circuitry 900 may be thought of as an array of logic gates, interconnections, and switches. The switches can be programmed to change how the logic gates are interconnected by the interconnections, effectively forming one or more dedicated logic circuits (unless and until the FPGA circuitry 900 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 5 and 6. As such, the FPGA circuitry 900 may be configured and/or structured to effectively instantiate some or all of the operations/functions corresponding to the machine readable instructions of the flowchart(s) of FIGS. 5 and 6 as dedicated logic circuits to perform the operations/functions corresponding to those software instructions in a dedicated manner analogous to an ASIC. Therefore, the FPGA circuitry 900 may perform the operations/functions corresponding to the some or all of the machine readable instructions of FIGS. 5 and 6 faster than the general-purpose microprocessor can execute the same.

In the example of FIG. 9, the FPGA circuitry 900 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

The FPGA circuitry 900 of FIG. 9, includes example input/output (I/O) circuitry 902 to obtain and/or output data to/from example configuration circuitry 904 and/or external hardware 906. For example, the configuration circuitry 904 may be implemented by interface circuitry that may obtain a binary file, which may be implemented by a bit stream, data, and/or machine-readable instructions, to configure the FPGA circuitry 900, or portion(s) thereof. In some such examples, the configuration circuitry 904 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 906 may be implemented by external hardware circuitry. For example, the external hardware 906 may be implemented by the microprocessor 800 of FIG. 8.

The FPGA circuitry 900 also includes an array of example logic gate circuitry 908, a plurality of example configurable interconnections 910, and example storage circuitry 912. The logic gate circuitry 908 and the configurable interconnections 910 are configurable to instantiate one or more operations/functions that may correspond to at least some of the machine readable instructions of FIGS. 5 and 6 and/or other desired operations. The logic gate circuitry 908 shown in FIG. 9 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 908 to enable configuration of the electrical structures and/or the logic gates to form circuits to perform desired operations/functions. The logic gate circuitry 908 may include other electrical structures such as look-up tables (LUTs), registers (e.g., flip-flops or latches), multiplexers, etc.

The configurable interconnections 910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 908 to program desired logic circuits.

The storage circuitry 912 of the illustrated example is structured to store result(s) of the one or more of the operations performed by corresponding logic gates. The storage circuitry 912 may be implemented by registers or the like. In the illustrated example, the storage circuitry 912 is distributed amongst the logic gate circuitry 908 to facilitate access and increase execution speed.

The example FPGA circuitry 900 of FIG. 9 also includes example dedicated operations circuitry 914. In this example, the dedicated operations circuitry 914 includes special purpose circuitry 916 that may be invoked to implement commonly used functions to avoid the need to program those functions in the field. Examples of such special purpose circuitry 916 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 900 may also include example general purpose programmable circuitry 918 such as an example CPU 920 and/or an example DSP 922. Other general purpose programmable circuitry 918 may additionally or alternatively be present such as a GPU, an XPU, etc., that can be programmed to perform other operations.

Although FIGS. 8 and 9 illustrate two example implementations of the programmable circuitry 712 of FIG. 7, many other approaches are contemplated. For example, FPGA circuitry may include an on-board CPU, such as one or more of the example CPU 920 of FIG. 8. Therefore, the programmable circuitry 712 of FIG. 7 may additionally be implemented by combining at least the example microprocessor 800 of FIG. 8 and the example FPGA circuitry 900 of FIG. 9. In some such hybrid examples, one or more cores 802 of FIG. 8 may execute a first portion of the machine readable instructions represented by the flowchart(s) of FIGS. 5 and 6 to perform first operation(s)/function(s), the FPGA circuitry 900 of FIG. 9 may be configured and/or structured to perform second operation(s)/function(s) corresponding to a second portion of the machine readable instructions represented by the flowcharts of FIGS. 5 and 6, and/or an ASIC may be configured and/or structured to perform third operation(s)/function(s) corresponding to a third portion of the machine readable instructions represented by the flowcharts of FIGS. 5 and 6.

It should be understood that some or all of the circuitry of FIG. 2 may, thus, be instantiated at the same or different times. For example, same and/or different portion(s) of the microprocessor 800 of FIG. 8 may be programmed to execute portion(s) of machine-readable instructions at the same and/or different times. In some examples, same and/or different portion(s) of the FPGA circuitry 900 of FIG. 9 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 800 of FIG. 8 may execute machine readable instructions in one or more threads executing concurrently and/or in series. In some examples, the FPGA circuitry 900 of FIG. 9 may be configured and/or structured to carry out operations/functions concurrently and/or in series. Moreover, in some examples, some or all of the circuitry of FIG. 2 may be implemented within one or more virtual machines and/or containers executing on the microprocessor 800 of FIG. 8.

In some examples, the programmable circuitry 712 of FIG. 7 may be in one or more packages. For example, the microprocessor 800 of FIG. 8 and/or the FPGA circuitry 900 of FIG. 9 may be in one or more packages. In some examples, an XPU may be implemented by the programmable circuitry 712 of FIG. 7, which may be in one or more packages. For example, the XPU may include a CPU (e.g., the microprocessor 800 of FIG. 8, the CPU 920 of FIG. 9, etc.) in one package, a DSP (e.g., the DSP 922 of FIG. 9) in another package, a GPU in yet another package, and an FPGA (e.g., the FPGA circuitry 900 of FIG. 9) in still yet another package.

A block diagram illustrating an example software distribution platform 1005 to distribute software such as the example machine readable instructions 732 of FIG. 7 to other hardware devices (e.g., hardware devices owned and/or operated by third parties from the owner and/or operator of the software distribution platform) is illustrated in FIG. 10. The example software distribution platform 1005 may be implemented by any computer server, data facility, cloud service, etc., capable of storing and transmitting software to other computing devices. The third parties may be customers of the entity owning and/or operating the software distribution platform 1005. For example, the entity that owns and/or operates the software distribution platform 1005 may be a developer, a seller, and/or a licensor of software such as the example machine readable instructions 732 of FIG. 7. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 732, which may correspond to the example machine readable instructions of FIGS. 5 and 6, as described above. The one or more servers of the example software distribution platform 1005 are in communication with an example network 1010, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 732 from the software distribution platform 1005. For example, the software, which may correspond to the example machine readable instructions of FIGS. 5 and 6, may be downloaded to the example programmable circuitry platform 700, which is to execute the machine readable instructions 732 to implement the post-provisioning service 102. In some examples, one or more servers of the software distribution platform 1005 periodically offer, transmit, and/or force updates to the software (e.g., the example machine readable instructions 732 of FIG. 7) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that transform post-provisioning tasks from a first file format to a second file format compatible with IDEM VMs. Disclosed systems, apparatus, articles of manufacture, and methods improve the efficiency of using a computing device by implementing post-provisioning tasks on IDEM plugins and IDEM VMs without requiring a new version of the cloud management platform to be deployed. Disclosed systems, apparatus, articles of manufacture, and methods are accordingly directed to one or more improvement(s) in the operation of a machine such as a computer or other electronic and/or mechanical device.

Example 1 includes an apparatus comprising memory, instructions, and programmable circuitry to be programmed by the instructions to obtain metadata associated with a post-provisioning task, the post-provisioning task to modify a plugin, the plugin to provide a capability to a cloud resource of a computing platform provider, the metadata represented in accordance with a first file format, transform the metadata from the first file format to a second file format, the second file format compatible with the plugin, and register the post-provisioning task in a deployment environment provided by the computing platform provider.

Example 2 includes the apparatus of example 1, wherein the first file format is a Java file format and the second file format is an idempotent (IDEM) file format.

Example 3 includes the apparatus of example 1, wherein the instructions are first instructions, wherein the programmable circuitry is to access a request to initiate the post-provisioning task on the plugin, the plugin provisioned in the deployment environment, and generate an executable file including second instructions to implement the post-provisioning task and third instructions to return a state of the plugin.

Example 4 includes the apparatus of example 3, wherein the executable file is associated with the second file format.

Example 5 includes the apparatus of example 3, wherein the programmable circuitry is to access the request via a user interface associated with a computing device, the computing device to access the plugin via the deployment environment.

Example 6 includes the apparatus of example 3, wherein the programmable circuitry is to execute the executable file by executing the second instructions by implementing the post-provisioning task on the plugin, and executing the third instructions after implementing the post-provisioning task.

Example 7 includes the apparatus of example 6, wherein the programmable circuitry is to determine the state of the plugin based on an output generated by the third instructions.

Example 8 includes a non-transitory machine readable storage medium comprising instructions to cause programmable circuitry to at least obtain metadata associated with a post-provisioning task, the post-provisioning task to modify a plugin, the plugin to provide a capability to a cloud resource of a computing platform provider, the metadata represented in accordance with a first file format, transform the metadata from the first file format to a second file format, the second file format compatible with the plugin, and register the post-provisioning task in a deployment environment provided by the computing platform provider.

Example 9 includes the non-transitory machine readable storage medium of example 8, wherein the first file format is a Java file format and the second file format is an idempotent (IDEM) file format.

Example 10 includes the non-transitory machine readable storage medium of example 8, wherein the instructions are first instructions, wherein first instructions are to cause the programmable circuitry to access a request to initiate the post-provisioning task on the plugin, the plugin provisioned in the deployment environment, and generate an executable file including second instructions to implement the post-provisioning task and third instructions to return a state of the plugin.

Example 11 includes the non-transitory machine readable storage medium of example 10, wherein the executable file is associated with the second file format.

Example 12 includes the non-transitory machine readable storage medium of example 10, wherein first instructions are to cause the programmable circuitry to access the request via a user interface associated with a computing device, the computing device to access the plugin via the deployment environment.

Example 13 includes the non-transitory machine readable storage medium of example 10, wherein first instructions are to cause the programmable circuitry to execute the executable file by executing the second instructions by implementing the post-provisioning task on the plugin, and executing the third instructions after implementing the post-provisioning task.

Example 14 includes the non-transitory machine readable storage medium of example 13, wherein the first instructions are to cause the programmable circuitry to determine the state of the plugin based on an output generated by the third instructions.

Example 15 includes a method comprising obtaining, by executing instructions with programmable circuitry, metadata associated with a post-provisioning task, the post-provisioning task to modify a plugin, the plugin to provide a capability to a cloud resource of a computing platform provider, the metadata represented in accordance with a first file format, transforming, by executing the instructions with the programmable circuitry, the metadata from the first file format to a second file format, the second file format compatible with the plugin, and registering, by executing the instructions with the programmable circuitry, the post-provisioning task in a deployment environment provided by the computing platform provider.

Example 16 includes the method of example 15, wherein the first file format is a Java file format and the second file format is an idempotent (IDEM) file format.

Example 17 includes the method of example 15, wherein the instructions are first instructions, further including accessing a request to initiate the post-provisioning task on the plugin, the plugin provisioned in the deployment environment, and generating an executable file including second instructions to implement the post-provisioning task and third instructions to return a state of the plugin.

Example 18 includes the method of example 17, wherein the executable file is associated with the second file format.

Example 19 includes the method of example 17, further including accessing the request via a user interface associated with a computing device, the computing device to access the plugin via the deployment environment.

Example 20 includes the method of example 17, further including executing the second instructions by implementing the post-provisioning task on the plugin, and executing the third instructions after implementing the post-provisioning task.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
obtaining, by executing instructions with programmable circuitry, metadata associated with a post-provisioning task, the post-provisioning task to modify a plugin, the plugin to provide a capability to a cloud resource of a computing platform provider, the metadata represented in accordance with a first file format;
transforming, by executing the instructions with the programmable circuitry, the metadata from the first file format to a second file format, the second file format compatible with the plugin; and
registering, by executing the instructions with the programmable circuitry, the post-provisioning task in a deployment environment provided by the computing platform provider.

2. The method of claim 1, wherein
the first file format is a Java file format and the second file format is an idempotent (IDEM) file format.

3. The method of claim 1 or 2, wherein
the instructions are first instructions, further including:
accessing a request to initiate the post-provisioning task on the plugin, the plugin provisioned in the deployment environment; and
generating an executable file including second instructions to implement the post-provisioning task and third instructions to return a state of the plugin.

4. The method of claim 3, wherein
the executable file is associated with the second file format.

5. The method of claim 3 or 4, further including
accessing the request via a user interface associated with a computing device, the computing device to access the plugin via the deployment environment.

6. The method of any one of the claims 3 to 5, further including:
executing the second instructions by implementing the post-provisioning task on the plugin; and
executing the third instructions after implementing the post-provisioning task.

7. The method of claim 6, further including:
determining the state of the plugin based on an output generated by the third instructions.

8. An apparatus comprising:
memory;
instructions; and
programmable circuitry to be programmed by the instructions to control and/or carry out the method as set forth in any one of the preceding claims.

9. A non-transitory machine readable storage medium comprising instructions to cause programmable circuitry to control and/or carry out a method as set forth in any one of the preceding method claims.
